# EUROPEAN PATENT SPECIFICATION

(11) **EP 3 070 064 B1**
(45) Date of publication and mention of the grant of the patent: **01.01.2020**
(21) Application number: 16020084.6
(22) Date of filing: 16.03.2016
(51) Int. Cl.: C04B 7/19, C04B 7/24

(54) **METHOD FOR PRODUCING A LOW-CARBON CLINKER**
VERFAHREN ZUR HERSTELLUNG EINE KOHLENSTOFFARME KLINKER
PROCÉDÉ DE FABRICATION D'UN CLINKER À FAIBLE ÉMISSION DE CARBONE

(30) Priority: 17.03.2015 PT 15108290
(43) Date of publication of application: 21.09.2016
(73) Proprietor: Secil-Companhia Geral de Cal e Cimento S.A., 1600-079 Lisboa (PT)
(72) Inventor: JESUS DE SEQUEIRA SERRA NUNES, Angela Maria, 2925-181 Vila Nogueira de Azeitão (PT); CORREIA SALVA, João Manuel, 1600-079 Lisboa (PT)
(74) Representative: Pereira da Cruz, Joao

(56) References cited:
- EP-A1- 2 786 973
- WO-A2-2010/059882
- CA-C- 2 234 523
- Crawley And Ray: "Sliding Disc Discharge Valve", , 5 August 2013 (2013-08-05), XP055290256, Retrieved from the Internet: URL:http://www.crawleyandray.com/ash-disch arge-valves.pdf [retrieved on 2016-07-21]
- Secil: "PROCESSO DE FABRICO DE CIMENTO", , 31 December 2014 (2014-12-31), XP055290262, Retrieved from the Internet: URL:http://www.secil.pt/pdf/Processo de Fabrico de Cimento.pdf [retrieved on 2016-07-21]

## Description

### FIELD OF THE INVENTION

The present invention falls within the field of building materials, particularly in the production of cement. It is specifically referred to the production of a clinker, i.e. cement production in an initial production stage and from which Portland cement is obtained. The present invention provides a development in clinker production with respect to the known methods, thus obtaining a clinker with low greenhouse gases emissions, reducing the specific heat consumption and increasing chemical resistance.

### BACKGROUND OF THE INVENTION

Nowadays, the production of clinker is carried out in lines with rotary kilns where the thermal recovery is already quite complete. This method has yet much thermal inefficiency due to direct and/or indirect losses.

The clinker produced in these lines is subsequently subjected to a milling process during which various additions are added, namely setting adjusters, usually calcium sulfate, as well as a series of additions such as natural and artificial pozzolanic materials (natural pozzolanas, fly ash, carbon black and calcined clays), blast furnace slag or even just the limestone filer in proportions which depend on the type of cement to be produced or on the desired resistance class.

In order to reduce the energy consumption in the cement production while maintaining the mechanical performance as much as possible, the option has been to try increasing the incorporation of additions, thus reducing the clinker factor present in Portland cements, being this a direct way to reduce specific energy consumption and thus reduce CO₂ emissions associated to the cement and to the concrete produced with it. By adding these materials at the milling stage, the only treatment process they are subjected is increasing its specific surface, improving only by this way their reactivity, if they have it, as is the case of pozzolanic materials and blast furnace slag. Typically these materials are waste or by-products of other industries, except in the case of natural pozzolanas, diatomites or calcined clay materials. However the use of the latter require an investment in dedicated kilns whose final economic balance and utilization advantages are, in this way, very restricted in terms of its viability.

In order to try to reduce specific consumption in clinker production there have been several patents - such as US 2013 118384 A1, Mx 2014 001752 or SK 288177 B6 - which are related to belitic cements and essentially seek to modify the mineralogy, by changing the chemical composition of the raw material to be baked and by reducing the clinkering temperature which leads to the reduction of one of the more reactive phases, the C₃S, in order to form high temperature C₂S, although less reactive, which results in a significant reactivity loss of the clinker thus conditioning the entire line production in the case of this mineralogical modification, and whose impact on the cement quality is mainly reflected in the initial resistances, generally quite lower than the usual values (common values are in the range of 25 to 30%).

Another attempt relates to the use of mineralizers (see patent T0094102) which, by lowering the melting point, allow some reduction in the clinkering temperature and thus slightly lowering the heat consumption. Unfortunately, the amounts of mineralizers that are possible to introduce normally only allow a decreasing of no more than 100 °C and even so with some losses of the clinker reactivity and with penalizing costs for the industry.

It must be noted that the documents referred in the following were considered the most relevant. The document "Processo de Fabrico de Cimento" of the Applicant, which discloses the common cement manufacturing method and is part of the preamble of claim 1 of the present invention. The Applicant does not intend to claim this process. It was also mentioned the Patent Application CA2234523A1, which differs from the present invention due to the fact that the process of the present invention adopts other materials apart from the fly ash, either processed as unprocessed (lean clays, shale, slag, etc.). There is no indications nor motivations in this Patent Application (CA 2 234 523 A1) about which other material types can be used apart from fly ash, and the calcination with mineralogical reorganization of the material with processing step is not included, but simply a drying.

It is also mentioned the document "Double-Pump Valve" which discloses the use of a double valve for collecting materials such as fly ash, clinker and other materials specified in that document. A valve of this type is also used for the same purpose in the present invention. However, as mentioned above, apart from those raw material, also non-processed materials are collected. This document does not disclose nor give any motivation for using this type of valve in another type of materials apart from those referred.

Regarding the document Vizcaína Andrès L. et al., it refers to a traditional baking process, although in a separate clinker kiln with a subsequent mixing in the cement mill.

The surprising effect of the invention is the possibility to perform a co-processing at this point of the method, taking advantage of the heat exchanged with the clinker by using it in a sintering process of the additional material, which is completely inert such as clays or shale, and thus simultaneously favoring the material cooling by using thermal energy for its mineralogical rearrangement in order to enhance its reactivity. The sintering process of the additional material now proposed enables huge energy savings by avoiding investments in specific kilns, as till now has always happened. This effect is achieved through the stage d) of the claimed method, i.e. with the introduction of silico-aluminous materials in the cooler head during the cooling stage, which are processed there through low temperature calcination with rearrangement of the microstructure.

### BRIEF DESCRIPTION OF THE DRAWINGS

Fig. 1 - Refers to the eventual positioning of the silico-aluminous material inlet.
Fig. 2 - Refers to the eventual positioning of the silico-aluminous material inlet with smaller thermal needs.

### SUMMARY

The present application consists in the development of a method for producing a clinker with low emissions of greenhouse gas, reduced specific heat consumption and increased chemical resistance, based on a change in the coolers of actual production lines consisting of cyclone towers and rotary kilns.

The heat released in the cooler is partially regenerated for the combustion process through the use of the hot gases that are reintroduced in the secondary air level. However much of this heat is lost by the material itself which undergoes a temperature drop of around 1000 °C at this process stage, in the same proportion of the equipment inefficiency.

The traditional Portland clinker has essentially two silicate phases in its composition, tri-calcium silicate (C₃S) and di-calcium silicate (C₂S), wherein the first one is more reactive but meta-stable which implies that it must undergo a sudden cooling in order to stay in the desired mineralogical form, which is achieved through this type of equipment.

The low-carbon clinker would then be obtained by mineralogical change at the cooler through introduction of a silico-aluminous material, by establishing an important heat exchange which will allow the thermal treatment of this material and its homogenization and recombination, thus contributing to an increase of the clinker cooling effectiveness. The thermal processing of the silico-aluminous material introduced in this way will produce a new phase consisting mainly of mono-silicates which react in the presence of calcium hydroxide, although more slowly than in the phases normally present in traditional clinker (C₃S and C₂S). Thus the product resulting from this modification is a mechanically and chemically very resistant clinker consisting of three silicate phases.

If compared to the current nominal capacity, the capacity of the production line can thus be increased in the proportion of the silico-aluminous material addition, thus reducing the specific consumption of heat and the greenhouse gas emissions in the direct proportion of the amount introduced.

### DETAILED DESCRIPTION

This invention essentially seeks the production of a very reactive clinker, with high chemical resistance and lower specific consumption, usually in the direct proportion of the material introduced in the final stage of the clinkering process. As a consequence the greenhouse gas emissions will be accordingly reduced. The amount of material that is possible to introduce will be a function of a balance which is largely dependent on the type and size of the plant, of its operability and of the desired final reactivity of the clinker obtained in this way, wherein it is necessary to carry out a thermal energy balance and valuate the availability of line ventilation in each case.

Currently, in actual clinker Portland production lines, this thermal process occurs in a first stage together with the calcination of the limestone present in the raw material, usually in the pre-calcination and/or in the cyclone tower. In a second stage the material enters the kiln where it will reach the clinkering temperature and where the main reactions that will lead to the formation of tri-calcium and di-calcium silicates take place, with the material reaching 1450 °C in this stage. Subsequently it must undergo a sudden cooling in the cooler in the final stage in the kiln, wherein the clinker will lose about 1000 °C in order to ensure an effective cooling, thus providing the conditions to maintain the tri-calcium silicate formed during the previous stage of the process (meta-stable phase with a tendency of converting back to a di-calcium silicate releasing free lime in the case of a slower cooling), which leads to a direct reactivity loss of the final product, especially in the early times, as well as an energy loss with its associated costs, without any possible recovery regarding its final quality.

The silico-aluminous materials - usually clay materials, marl clays, shale, or even some of the additions commonly used in industry, such as fly ash or other waste - become actives in terms of pozzolanicity or have its reactivity enhanced when submitted to a thermal processing.

Depending on the material, usually the activation temperatures values vary between 700 °C and 900 °C for silico-aluminous natural materials - such as kaolinite clays, montmorillonite clays, marl clays, or shale - to values between 200 °C and 250 °C for some materials already processed such as fly-ash or other waste or by-products with pozzolanic potential.

In fact, even with the reutilization of the hot gases, which are recovered in majority of the lines, there is still a lot of unutilized heat in the kiln coolers, namely in grate coolers.

The introduction of said silico-aluminous materials can then be carried out in this stage where they will favor the clinker temperature decrease, promoting a better cooling and, at the same time, due to the existing heat exchange they can benefit from a calcination processing which is sufficient for its activation, thus contributing to the presence of a third silicate phase in said mono-silicate based product, whose mechanical resistance performance is important, especially in the early times, but is mainly distinguished due to its chemical resistance. Essentially, this energy recovery solves in an unexpected way the following questions:
√ Minimizing losses and inefficiencies of the current process, improving the cooling conditions;
√ Avoiding a dedicated line, with higher specific consumption, for the treatment of those materials which could subsequently be added to the cement;
√ Improving clinker milling ability;
√ Considering the process stage in which the raw material is introduced, the same plant can easily change from traditional clinker to low-carbon clinker depending on the specific production needs, because their usual composition it is not changed;
√ Reducing the actual specific consumption in clinker production and related CO₂ emissions, directly increasing the line production;
√ Promoting the use of waste materials with potential pozzolanic properties, which currently have no application or are underused and thus have an increased effectiveness with this thermal processing.

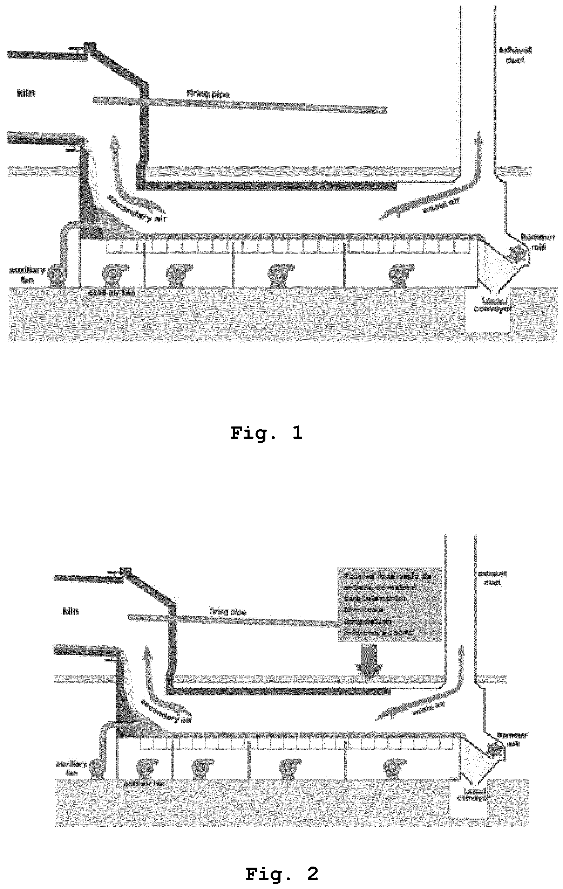

As mentioned above, the introduction of these materials depends on the geometry and type of cooler and should be ensured, as shown in the example of Figure 1, by a dosing conveyor buffered by a double-inlet valve in order to minimize heat losses and air infiltration (false air). The maximum allowed amounts shall be set according to the thermal balance and the available energy, the geometry and clinker reactivity usually produced in the changed line, and according to the selected silico-aluminous materials namely regarding its thermal processing requirements, its moisture and particle size. Indeed, in the cases of high C₃S contents, the incorporation potential may be higher as the reactivity losses regarding the concrete resistance are thus compensated.

The material moisture can be a limiting factor for the quantity to be incorporated as it affects gas flow. In these cases, the prior drying of silico-aluminous material can significantly improve the yield.

### Object of the Invention

The object of the present invention is a method for producing a low-carbon clinker with low energy consumption comprising the following stages:
a) Pre-calcination of the limestone present in the raw material, along the pre-calciner and in the cyclone tower;
b) Start of the clinkering process with the raw material inlet after pre-calcination, at a temperature higher than 1400 °C and with a C₃S content above 60%;
c) Cooling the material;
   further comprising
d) Introduction of 5 to 30% of silico-aluminous material relative to the mass of material which is here processed in the cooling stage, at the cooler head, wherein the introduction of the silicon-aluminous materials is performed by a dosing conveyor and buffered by a double-inlet valve.

The introduction of said silico-aluminous materials at this stage favors the clinker temperature decrease and at the same time promotes a better cooling due to the heat exchanged. These materials can benefit from a calcination processing which is sufficient for its activation, contributing to the presence of a third silicate phase in said mono-silicate based product, whose performance is important regarding its mechanical resistance, especially in the early times, but is mainly distinguished by the chemical resistance.

The surprising effect of the present invention is the possibility to perform a co-processing in this point of the method, taking advantage of the heat exchanged with the clinker by using it in a sintering process of the additional material, which is completely inert, such as clays or shale, and thus simultaneously favoring the material cooling by using thermal energy for its mineralogical rearrangement in order to enhance its reactivity. The sintering process of the additional material now proposed enables huge energy savings by avoiding investments in specific kilns, as till now has always happened. This effect is achieved through the stage d) of the claimed method, i.e. with the introduction of silico-aluminous materials in the cooler head during the cooling stage, which are processed there through low temperature calcination with rearrangement of the microstructure.

The introduction of the silicon-aluminous materials is performed by a dosing conveyor and buffered by a double-inlet valve.

In a preferred embodiment, the silico-aluminous materials are selected from blast furnace slag, clays, marl clays, shale.

In another preferred embodiment the used clay materials have more than 25% potential for reactive silica formation.

Usually the silico-aluminous materials may also be selected from natural pozzolanas, diatomite, and processed materials such as artificial pozzolanas originated from waste or by-products of other industries, such as fly ash, bottom ash, silica fumes or other by-products.

The activation temperatures of the processed materials are between 200 °C and 250 °C, and the activation temperatures of silico-aluminous materials are between 700 °C and 900 °C.

### EXAMPLES

### Example 1 - Low-carbon clinker using calcined clays

In a traditional line, when the production is optimized to maximize the quality of the produced clinker, i.e. preferably a flour which allows obtaining C₃S contents in the clinker above 60%, it will be possible to introduce in the cooler about 15% to 20% of kaolinite clays whose thermal processing requires temperatures around 800 °C, previously determined by a thermal gravimetric analysis and DTA.

Once the characteristics of the materials to incorporate were analyzed, the dosing takes place in the cooler head according to Figure 1. The specific consumption of thermal energy of the clinker thus formed is lowered by about at least 15%.

The mineralogical composition of mono-silicates which form in the introduction undergoes a change at this stage. The chemical analysis indicates an increase of the silica contents and a decrease of calcium oxide contents. The reactivity does not change significantly, with a loss in resistance less than 5% after 1 day, and 98% of the clinker without any change after 28 days. The process control follows the usual rules through XRF and XRD.

| | SiO₂ | Al₂O₃ | Fe₂O₃ | CaO | MgO | Na2O eq (1) | Cl | SO₃ | Free lime | Lost at fire | Insoluble residue |
|---|---|---|---|---|---|---|---|---|---|---|---|
| Typical Portland clinker | 21,28 | 4,80 | 3,50 | 65,20 | 1, 98 | 0,80 | 0,06 | 1,83 | 1,60 | 1, 90 | 1,22 |
| Low-CO₂ Portland clinker | 27,63 | 11,17 | 3,01 | 52,65 | 1,63 | 0,97 | 0,05 | 1,52 | 1,29 | 1,99 | 14,76 |

### Example 2 - Low-carbon clinker using bottom ash or fly ash with high unburned content (12%).

Introduction of 18% to 20% of bottom ash or fly ash in the cooler with high unburned content, whose thermal processing requires temperatures around 200 °C previously determined by a thermal gravimetric analysis and DTA.

Once the characteristics of the material were analyzed, the dosing takes place in the grate type cooler, according to Figure 2. The specific consumption of thermal energy of the clinker thus formed is lowered by about 18% in this situation, depending on the moisture contents of the material.

The mineralogical composition of mono-silicates which form in the introduction undergoes a change at this stage. The reactivity does not change significantly, with a loss in resistance less than 7% after 1 day, and 95 to 98% of the clinker without any change after 28 days.

The process control follows the usual XRF and XRD analysis.

| | SiO₂ | Al₂O₃ | Fe₂O₃ | CaO | MgO | Na₂O eq (1) | Cl | SO₃ | Free lime | Lost at fire |
|---|---|---|---|---|---|---|---|---|---|---|
| Typical Portland clinker | 21,28 | 4,80 | 3,50 | 65,20 | 1,98 | 0,80 | 0,06 | 1,83 | 1,60 | 1,90 |
| Low-CO₂ Portland clinker | 24,29 | 6,10 | 7,94 | 54,66 | 1,70 | 1,13 | 0,05 | 1,74 | 1,31 | 1,88 |

As will be apparent to an expert, various minor alterations are possible which should however be included within the scope of the present invention.

## Claims

1. Method for producing a low-carbon clinker with low energy consumption, comprising the following stages:
a) Pre-calcination of the limestone present in the raw material, along the pre-calciner and in the cyclone tower;
b) Start of the clinkering process with the raw material inlet after pre-calcination, at a temperature higher than 1400°C and with a C₃S content above 60%;
c) Cooling the material;
**characterized by** further comprising
d) Introduction of 5 to 30% of silico-aluminous materials relative to the mass of material which is here processed in the cooling stage, at the cooler head, wherein the introduction of the silicon-aluminous materials is performed by a dosing conveyor and buffered by a double-inlet valve.

2. Method for producing a low-carbon clinker according to claim 1, **characterized in that** the silico-aluminous materials are selected from blast furnace slag, clays, marl clays, shale.

3. Method for producing a low-carbon clinker according to claim 1 **characterized in that** the silico-aluminous material is selected from natural pozzolanas, diatomite and processed materials, such as artificial pozzolanas originated from waste or by-products of other industries, for instance fly ash, bottom ash, silica fumes or other by-products.

4. Method for producing a low-carbon clinker according to claim 1 and 3 **characterized in that** the activation temperatures of the processed materials are between 200 °C and 250 °C.

5. Method for producing a low-carbon clinker according to claim 1 and 2 **characterized in that** the activation temperatures of the silico-aluminous materials are between 700°C and 900 °C.

## Patentansprüche

1. Method zur Herstellung eines kohlenstoffarmen Klinkers mit geringem Energieverbrauch, umfassend die folgenden Stufen:
a) Vorkal-zinierung des im Rohmaterial, entlang des Vorkal-zinators und im Zyklonturm vorhandenen Kalksteins;
b) Start des Klinkerprozesses mit dem Rohmaterialeinlass nach der Vorcalcinierung bei einer Temperatur von mehr als 1400°C und einem C₃S-Gehalt von über 60%;
c) Abkühlen des Materials;
**dadurch gekennzeichnet, dass** es ferner umfasst
d) Einbringen von 5 bis 30% silico-aluminiumhaltigen Materialien, bezogen auf die Materialmasse, die hier in der Kühlstufe verarbeitet wird, am Kühlerkopf,
wobei das Einbringen der silico-aluminiumhaltigen Materialien durch einen Dosierförderer erfolgt und durch ein Doppeleinlassventil gepuffert wird.

2. Verfahren zur Herstellung eines kohlenstoffarmen Klinkers nach Anspruch 1, **dadurch gekennzeichnet, dass** die silicoaluminösen Materialien ausgewählt sind aus Hochofenschlacke, Ton, Mergelton, Schiefer.

3. Verfahren zur Herstellung eines kohlenstoffarmen Klinkers nach Anspruch 1, **dadurch gekennzeichnet, dass** das Siliciumaluminium ausgewählt ist aus natürlichen Puzzolanen, Kieselgur und verarbeiteten Materialien, wie künstlichen Puzzolanen, die aus Abfällen oder Nebenprodukten anderer Industrien stammen, beispielsweise aus der Fliege Asche, Bodenasche, Kieselsäuredämpfe oder andere Nebenprodukte.

4. Verfahren zur Herstellung eines kohlenstoffarmen Klinkers nach Anspruch 1 und 3, **dadurch gekennzeichnet, dass** die Aktivierungstemperaturen der verarbeiteten Materialien zwischen 200°C und 250°C liegen.

5. Verfahren zur Herstellung eines kohlenstoffarmen Klinkers nach Anspruch 1 und 2, **dadurch gekennzeichnet, dass** die Aktivierungstemperaturen der silico-aluminiumhaltigen Materialien zwischen 700°C und 900°C liegen.

## Revendications

1. Procédé de production d'un clinker à faible teneur en carbone et à faible consommation d'énergie, comprenant les étapes suivantes:
a) Précalcination du calcaire présent dans la matière première, le long du précalcinateur et dans la tour à cyclones;
b) Début du processus de clinkérisation avec l'entrée de la matière première après précalcination, à une température supérieure à 1400°C et avec une teneur en C₃S supérieure à 60% ;
c) Refroidissement du matériau;
**caractérisé en ce qu'**il comprend en outre :
d) Introduction de 5 à 30% des matériaux silico-alumineux, par rapport à la masse de matériau qui est ici traitée dans la phase de refroidissement, à la tête du refroidisseur,
oú l'introduction des matériaux silico-alumineux est effectuée par un convoyeur de dosage et tamponnée par une vanne à aspiration double.

2. Procédé de production d'un clinker à faible teneur en carbone selon la revendication 1, **caractérisé en ce que** les matériaux silico-alumineux sont choisis parmi le laitier de haut fourneau, les argiles, les argiles marneuses, les schistes.

3. Procédé de production d'un clinker à faible teneur en carbone selon la revendication 1, **caractérisé en ce que** le matériau silico-alumineu est choisis parmi les pouzzolanes naturelles, la diatomite, et les matériaux traités tels que les pouzzolanes artificielles provenant de déchets ou sous-produits d'autres industries, par exemple les cendres volantes, les mâchefers, les fumées de silice ou autres produits dérivés.

4. Procédé de production d'un clinker à faible teneur en carbone selon les revendications 1 et 3, **caractérisé en ce que** les températures d'activation des matériaux traités sont comprises entre 200 °C et 250 °C.

5. Procédé de production d'un clinker à faible teneur en carbone selon les revendications 1 et 2, **caractérisé en ce que** les températures d'activation des matériaux silico-alumineux sont comprises entre 700°C et 900 °C.
